# EUROPEAN PATENT APPLICATION

(11) **EP 3 364 624 A1**
(43) Date of publication of application: **22.08.2018**
(21) Application number: 17156994.0
(22) Date of filing: 20.02.2017
(51) Int. Cl.: H04L 29/06, H04L 29/08

(54) **A METHOD OF DISTRIBUTING A SUB-FLOW ASSOCIATED WITH A SESSION AND A NETWORK APPARATUS**

(71) Applicant: Nokia Solutions and Networks Oy, 02610 Espoo (FI)
(72) Inventor: KUCERA, Stepan, Dublin 15 (IE); FAHMI, Kariem, Dublin 15 (IE)
(74) Representative: Bryers LLP

(57) **Abstract**

A method of distributing a sub-flow associated with a session in a network, the method comprising generating a connection identification token, the connection identification token representing an identifier associated with a session requested or being executed by user equipment, mapping the identifier to a virtual machine instance or network apparatus configured to execute a network service and forwarding a session sub-flow of the user equipment to the virtual machine instance or network apparatus using the identifier.

## Description

### TECHNICAL FIELD

Aspects relate, in general, to a method of distributing a sub-flow associated with a session in a network and to a network apparatus.

### BACKGROUND

Demand for mobile data has roughly doubled every year and a 15-fold increase in data traffic is expected in developed markets by 2020, while developing markets could potentially experience a 60-fold increase.

To accommodate the surge in demand for network bandwidth, multi-connectivity technologies such as 3GPP LTE/WiFi integration (LWIP) and the IETF multi-path transport control protocol (MPTCP) can be used. Such multi-connectivity technologies enable the seamless aggregation of the capacity of multiple radio interfaces such as LTE, HSPA, and WiFi for a high-speed delivery of wireless data over multiple parallel paths.

### SUMMARY

According to an example, there is provided a method of distributing a sub-flow associated with a session in a network, the method comprising generating a connection identification token, the connection identification token representing an identifier associated with a session requested or being executed by user equipment, mapping the identifier to a virtual machine instance or network apparatus configured to execute a network service and forwarding a session sub-flow of the user equipment to the virtual machine instance or network apparatus using the identifier. The connection identification token can be generated at a network element, a network load balancer or a network router. The connection identification token can be communicated to the user equipment from the network element, load balancer or router as part of a session handshake or from the virtual machine instance or network apparatus. The connection identification token can comprises the IP address and port number of a packet transmitted by the user equipment. The connection identification token can be communicated to one or more network elements as at least part of a packet header field of packets transmitted as part of the session. The method can further comprise obfuscating the identifier. For example, the identifier can be hashed or otherwise encrypted using a key known only by the network element and/or user equipment. Packets of a sub-flow can be forwarded from the user equipment to the load balancer apparatus for distribution to the virtual machine instance or network apparatus. At least a part of the connection identification token can be communicated in a packet header field. The method can further comprise providing a packet in a format associated with the session including an identifier associated with a network device as well as the identifier associated with the user equipment. The identifier associated with the network device can be an IP address and/or port number of the network device. A packet can be injected into the session, whereby to enable advertisement of the identity of the network device and/or information for connection setup to the network device. A connection between the network device and a network load balancer can be provided. For example, a tunnel can be provided between the two.

According to an example, there is provided a network apparatus configured to distribute a sub-flow associated with a session in a network, the network apparatus configured to generate a connection identification token representing an identifier associated with user equipment requesting or executing the session, map the identifier to a virtual machine instance or network apparatus configured to execute a network service and forward a session sub-flow of the user equipment to the virtual machine instance or network apparatus using the identifier. The network apparatus can inject a session packet including an identifier associated therewith as well as the identifier associated with the user equipment into the session.

### BRIEF DESCRIPTION OF THE DRAWINGS

Embodiments will now be described, by way of example only, with reference to the accompanying drawings, in which:
Figure 1 is a schematic representation of the process for using a source IP address and port number as a multi-connectivity connection identifier according to an example;
Figure 2 is a schematic representation of injection of an advertisement of public IP addresses of NAT gateways that forward any ingress traffic to the load balancer;
Figure 3 is a schematic representation of a dual-connectivity user equipment connecting to a multi-path proxy instance deployed within the LTE EPC; and
Figure 4 is a schematic representation of a user-space VPN according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

A network service or content can be provided using a virtual machine instance. In this way, the network is able to respond to variations in load by spawning or deleting instances. The general purpose of load balancing is to fairly distribute the connections of multiple users across all available instances of a content server providing data or a service to those users in order to evenly spread traffic load between data centre (cloud) resources. In this way performance bottlenecks can be eliminated.

However, load balancing in multi-connectivity networks is a fundamental challenge as all parallel connections originating from the same mobile device (user equipment) should be assigned to the same serving virtual machine instance otherwise the multi-connectivity session of the device is interrupted. However, a load balancer apparatus has no obvious way to identify and group related connections because, by definition, such connections are transported over independent links within unrelated networks.

Load balancing in multi-connectivity networks can use the features of the MPTCP standard in which session-level identifiers in the form of 32-bit encrypted tokens can be used to identifying sub-flows belonging to the same session. However, this non-systematic approach to sub-flow grouping for load-balancing purposes is not practically deployable in server farms servicing millions of users and in which there is a very high chance of token collisions (two unrelated sessions using the same identifier), thereby causing the sub-flows to be assigned to incorrect servers and MPTCP sessions to fail. Active detection of token collisions is not an option as all active load balancers would then have to collaboratively cross-check the consistency of their internal sessions states, which is highly inefficient and difficult to implement and characterized by large signalling overhead and synchronization difficulties.

Equally difficult to implement are schemes that reduce token collision probability by manipulating MPTCP token assignment and/or token conversion into routing decisions. To this end, locally known secrets and ciphering functions are typically required. The resulting system is excessively complex and difficult to dynamically re-configure, also raising questions in terms of security (local secret distribution & maintenance) and implementation (reliance on SYN-cookies due to limited space in TCP header).

One way to replace the MPTCP token tracking approach is to use a virtual port number as a connection identifier but this approach is disrupted by network address translators and port-restricting firewalls, two common entities in IP networking. Other solutions with similarly low application potential assume non-standard measures such as provisioning content servers with both private and public IP addresses (difficult to implement as IP addresses are scarce and dynamically managed) and embedding connection identifiers into time stamps (this implies the need for coordination with mechanisms protecting against wrapped sequence numbers as well as packet redirection for packets that do not contain time stamps such as TCP FIN packets).

According to an example, there is provided a method of enabling reliable identification of data sub-flows that are transported over independent networks but which belong to the same multi-path connection. Such capability is a fundamental precursor of multi-path traffic steering/management functions such as load balancing.

In an example, the source IP address and source port number with which the first (initialization) sub-flow of a multi-path connection reaches the load balancer can be used as a multi-path connection identifier. The combination of source IP address and port number is a unique connection identifier from the load balancer perspective. Hence, load balancing scalability is achieved as identifier collisions are impossible even in large data centres. In addition, the generation of IP-based connection identifiers is by default taken care of by the underlying IP control plane which results in zero implementation overhead.

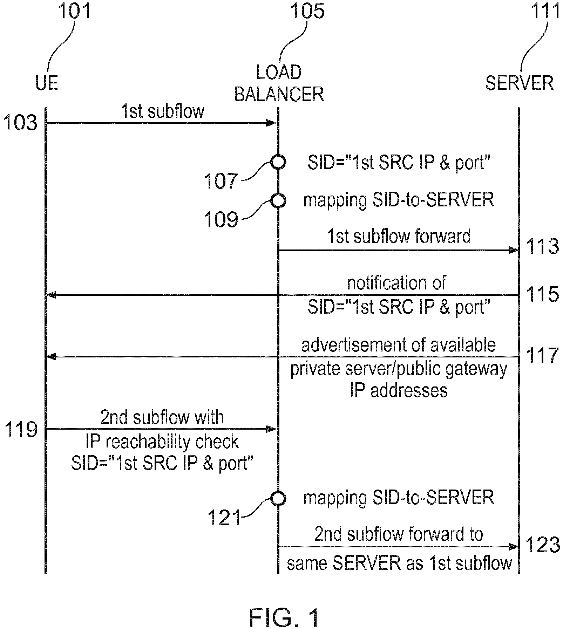

Figure 1 is a schematic representation of the process for using a source IP address and port number as a multi-connectivity connection identifier according to an example. A user equipment 101 can transmit a first sub-flow 103 of a multi-path session to a load balancer 105 in a network. The load balancer can generate a connection identification token 107 from the source (UE) IP address and port number and this can be mapped 109 to a server 111. The first sub-flow is then forwarded 113 to the server 111 The server 111 can notify 115 the UE 101 of the connection identification token 107 and advertise 117 available private server/public gateway IP addresses.

The UE 101 can generate a second sub-flow 119 for the session including the connection identification token 107 and transmit this to the load balancer 105. The load balancer 105 maps 121 the token 107 to the server 111 and forwards 123 the second sub-flow from the UE 101 to the server 111.

In an example, connection identifiers based on the source IP address and port number information can be communicated to connection peers either explicitly (such as in plain-text format for example) or implicitly (e.g., in the form of a cryptographic key or a hash function for example).

Independently of their format, connection identifiers can be physically transported in a dedicated packet header field. To minimize the field size - either to reduce the usage of packet header resources for the sake of other control signals (e.g., TCP options are limited in length) or to ensure backward-compatibility with pre-defined legacy fields (e.g., MPTCP tokens are 32-bit long), at least part of the identifier information can be delivered in the form of a pseudorandom number used in certain packet header fields such as sequence number.

The negative effects of network address translation on multi-path traffic control are eliminated. For example, multi-homed hosts can dynamically advertise currently active IP addresses to their peers (e.g., when a network interface is turned on/off). Yet private IP addresses used within networks that utilize network addresses translating (NAT) gateways are generally not reachable from external networks. For example, a smartphone can reach (with its LTE interface) the private IP address of a server within the LTE evolved packet core (EPC), e.g. the public data gateway, but the Wifi interface on the same smartphone operating in the public IP address space of the Internet would fail to connect to the server as it is located behind the LTE EPC NAT.

In this context, according to an example, load balancers can also append an advertisement of their own public / private IP addresses to that of the connection end-hosts own address advertisements by manipulating the relevant packet information during the packet's traversal of the load-balancer, and seamlessly forward subsequently received multi-path traffic to the right end-host using the above-mentioned connection identifier. Other intermediary nodes without load balancing capability such as network-edge gateways with NAT can also advertise their IP addresses but must forward all traffic a load balancer for a routing decision.

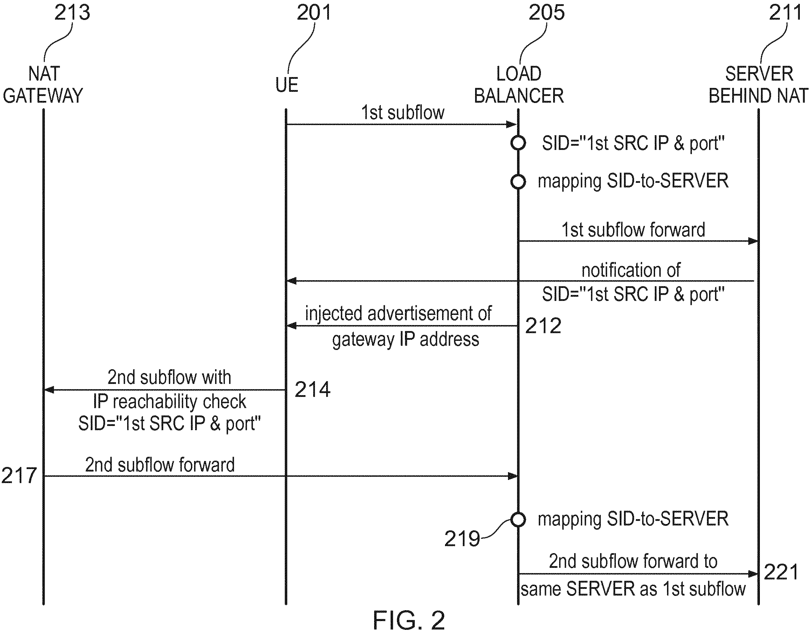

Figure 2 is a schematic representation of injection of an advertisement of public IP addresses of NAT gateways that forward any ingress traffic to the load balancer. The process as shown in figure 2 relating to generation of a connection identification token proceeds in the same way as described with reference to figure 1 The load balancer 205 can provide a packet 212 in a format associated with a session, which can be a copy of a packet for example, advertising the IP address of a network gateway 213. The UE can transmit a second sub-flow of the session 214 including a token to the gateway 213 which then forwards it 217, based on the token, to the load balancer 205. The load balancer 205 maps 219 the connection identification token from the second sub-flow to the server 211, which in the example of figure 2 can be a server behind the NAT gateway 213, and forwards 221 the second sub-flow to the same server as the first sub-flow, i.e. to server 211.

Multi-connectivity can be deployed in two main ways. For example, it can be implemented as part of a multi-connectivity capable networking stack in an operating system kernel. MPTCP is implemented following this philosophy. In mobile devices, however, it is more advantageous for both infrastructure manufacturers as well as operators to use the more flexible user-space approach. The two approaches will be described in more detail below.

### Kernel-space multi-connectivity

### A. Session identification

In MPTCP, connection initiation begins with a three-way handshake (SYN, SYN/ACK, ACK exchange) on a single path as depicted below:

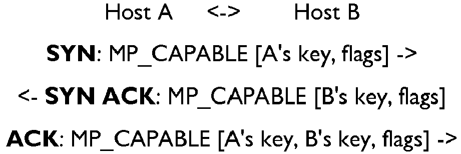

Each handshake packet contains the so-called "Multi-path Capable" (MP_CAPABLE) TCP option. This option declares its sender is capable of performing MPTCP and wishes to do so on this particular connection.

According to the MPTCPT standard, the MP_CAPABLE option is used to declare a 64-bit key that the sender has generated for this MPTCP connection. According to an example, apart from authentication purposes, the key is used to generate a token (a cryptographic hash of the key for example) for connection identification. All sub-flows associated with the same connection will share the same token, derived from the same share key.

According to an example, the key of Host B (the "listener", typically a server) is generated from the IP address and port number, indicated in the initial SYN packet of the source Host A as shown above. In an example, a hard-to-guess unique key can be constructed by:
i. concatenating the 32-bit source IP address, the 16-bit source port number, and a 16-bit random/padding number; and
ii. hashing based on an algorithm ideally known only to Host B.

According to an example, the connection identification token can be communicated in part using the legacy 32-bit field for explicit MPTCP tokens notification, while its remaining part can be communicated implicitly by means of suitably initialized MPTCP/TCP variables such as:
- TCP sequence numbers and TCP time stamps (both 32 bits long),
- MPTCP nonces (32-bit single-use random numbers that are used to prevent replay attacks on the authentication method),
- MPTCP Address ID (8-bit source address identifier used to facilitate removal of addresses modified by network address translation as well as prevention of duplicate sub-flow setup on the same path in case of simultaneous arrival of MP_JOIN and ADD_ADDR signals).

### B. Load balancing

In a network architecture where there are multiple instances of host B behind a load balancer, the load balancer can employ the same token generation scheme as the servers. In an example, intermediary network nodes such as NAT gateways and load balancers can advertise their IP addresses.

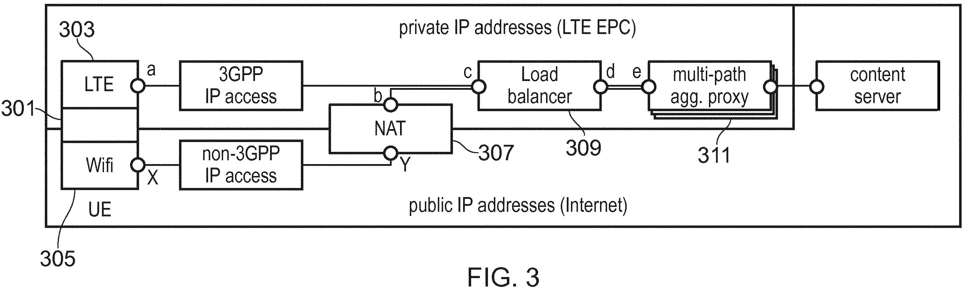

Figure 3 is a schematic representation of a dual-connectivity user equipment connecting to a multi-path proxy instance deployed within the LTE EPC. More specifically, figure 3 depicts the UE 301 connecting by using (i) an LTE interface 303 assigned a private IP address "a" of the LTE network, and (ii) a Wifi interface 305 assigned a public IP addresses "X".

In the example of figure 3, the NAT gateway 307 and the load balancer 309 can advertise IP addresses "Y" and "c", respectively, to the LTE 303 and Wifi 305 interfaces of the user equipment 301. Normally, only the connection end-hosts - the user equipment 303 and multi-path aggregation proxy 311 - would mutually advertise only IP addresses "a", "e" and "X". The NAT gateway 307 automatically forwards all ingress traffic to the load balancer 309 for a routing decision.

In an example, since (MP)TCP is a bi-directional protocol, connectivity advertisement by intermediary nodes can be done by injecting duplicate ACK packets with added advertised information (e.g., the MPTCP "ADD_ADDRESS" option). The maximum number of such duplicates is limited by the congestion detection threshold of the congestion control mechanisms (e.g., at most two consecutive MPTCP ACKs containing the MPTCP DSS option).

Once an MPTCP connection has begun with the MP_CAPABLE exchange, further sub-flows can be added to the connection. Hosts have knowledge of their own address(es), and can become aware of the other host's addresses through signalling exchanges. Using this knowledge, a host can initiate a new sub-flow over a currently unused pair of addresses. It is permitted for either host in a connection to initiate the creation of a new sub-flow.

According to an example, hosts can also specify which of the advertised addresses are private or public to simplify IP reachability testing by the other host from its own pool of IP addresses. IP reachability can be tested by attempting to open a connection between a given IP address pair. A link is declared unreachable if a connection attempt is unsuccessful after 2 seconds, for example. Successful test connections can be left open for subsequent use (e.g., by periodically sending keep-alive packets to maintain network address translation bindings) in order to eliminate connection setup delay prior to actual data transmission.

### User-space multi-connectivity

Multi-connectivity can also be deployed by taking advantage of the standard user-space framework for virtual private networks, available in every modern operating system. Unlike the legacy kernel-based approach, such user-space approach to multi-connectivity is deployed by downloading and installing an application (created and posted e.g. by the network operator). Importantly, there is no need for phone unlocking and/or super-user access which typically void phone warranty. More specifically, UE application data are routed to/from a user-space virtual private network (VPN) service via a virtual interface.

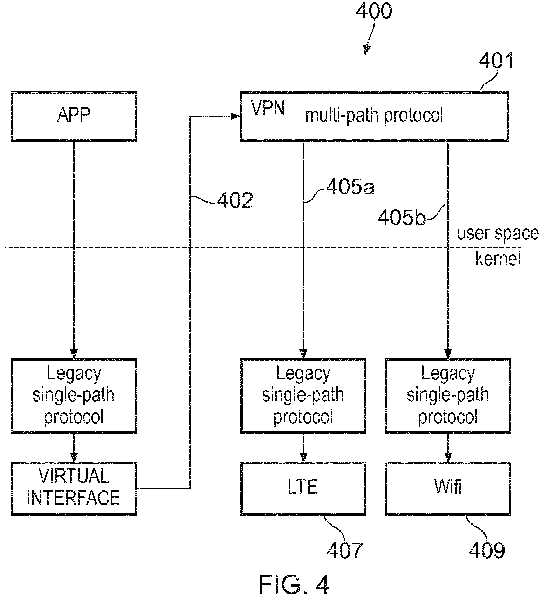

Figure 4 is a schematic representation of a user-space VPN according to an example. The VPN 401 can be configured in the UE 400 during the installation of the enabling application. In an example, on the uplink, the UE VPN 401 service "splits" the ingress single-path data flow 402 of the application into multiple egress sub-flows 405a, 405b which are then forwarded over multiple physical interfaces 407, 409 (e.g., LTE and WiFi) to a remote content server.

On the downlink, multiple ingress sub-flows from the remote server are aggregated by the UE VPN service 401 into a single data flow as required by the application. On the network side (not shown in Fig. 4 for simplicity), a multi-path proxy can be deployed to act as a counter-part of the UE-side VPN proxy (i.e., to aggregate the UL multi-path traffic and split the DL traffic among active paths) that inter-connects the UE with the content server over a legacy single-path connection.

The VPN framework is extremely flexible and provides no limitations to implementation. Both proxy controllers can communicate by using either data-plane packets (e.g., by appending new packet headers, creating new header), or parallel out-of-band communication channels (e.g., dedicated UDP-based connections). In the simplest case, UDP transport layer encapsulating either proprietary headers or standardized headers (e.g., TCP-over-UDP headers) can be used. According to an example, these headers can contain fields for session identification based on source IP address and port number similarly to the above case. The advantage of proprietary implementation is that dedicated full-length fields for explicit token delivery can be used which simplifies the overall design.

Thus, according to an example, there are multiple major benefits:
- Scalability - The combination of source IP address and port number is a unique connection identifier from the load balancer perspective. Hence, load balancing scalability is achieved as identifier collisions are impossible even in large data centers.
- Simplicity - The generation of IP-based connection identifiers is by default taken care of by the underlying IP control plane which implies zero implementation overhead of the proposed scheme thanks to efficient reuse of existing protocols.
- Robustness - Session collisions are impossible.
- Backward compatibility - applicable to both standardized protocols such as MPTCP and TCP as well as proprietary solutions such as user-space VPN.
- Systematic design - The solution is based on a systematic design.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method of distributing a sub-flow associated with a session in a network, the method comprising:
generating a connection identification token, the connection identification token representing an identifier associated with a session requested or being executed by user equipment;
mapping the identifier to a virtual machine instance or network apparatus configured to execute a network service; and
forwarding a session sub-flow of the user equipment to the virtual machine instance or network apparatus using the identifier.

2. A method as claimed in claim 1, further comprising generating the connection identification token at a network element, a network load balancer or a network router.

3. A method as claimed in claim 2, further comprising communicating the connection identification token to the user equipment from the network element, load balancer or router as part of a session handshake or from the virtual machine instance or network apparatus.

4. A method as claimed in any preceding claim, wherein the connection identification token comprises the IP address and port number of a packet transmitted by the user equipment.

5. A method as claimed in any preceding claim, further comprising communicating the connection identification token to one or more network elements as at least part of a packet header field of packets transmitted as part of the session.

6. A method as claimed in any preceding claim, further comprising obfuscating the identifier.

7. A method as claimed in claim 6, further comprising hashing or otherwise encrypting the identifier using a key known only by the network element and/or user equipment.

8. A method as claimed in claim 2, further comprising forwarding packets of a sub-flow from the user equipment to the load balancer apparatus for distribution to the virtual machine instance or network apparatus.

9. A method as claimed in any preceding claim, further comprising communicating at least a part of the connection identification token in a packet header field.

10. A method as claimed in any preceding claim, further comprising:
providing a packet in a format associated with the session including an identifier associated with a network device as well as the identifier associated with the user equipment.

11. A method as claimed in claim 10, wherein the identifier associated with the network device is an IP address and/or port number of the network device.

12. A method as claimed in claim 10 or 11, further comprising injecting the packet into the session, whereby to enable advertisement of the identity of the network device and/or information for connection setup to the network device.

13. A method as claimed in any of claims 10 to 12, further comprising providing a connection between the network device and a network load balancer.

14. A network apparatus configured to distribute a sub-flow associated with a session in a network, the network apparatus configured to:
generate a connection identification token representing an identifier associated with user equipment requesting or executing the session;
map the identifier to a virtual machine instance or network apparatus configured to execute a network service; and
forward a session sub-flow of the user equipment to the virtual machine instance or network apparatus using the identifier.

15. A network apparatus as claimed in claim 14, wherein the network apparatus is configured to inject a session packet including an identifier associated therewith as well as the identifier associated with the user equipment into the session.
